(19) Europäisches Patentamt
European Patent Office
Office européen des brevets

(11) **EP 3 818 273 B1**

(12) **FASCICULE DE BREVET EUROPEEN**

(45) Date de publication et mention de la délivrance du brevet:
**01.06.2022 Bulletin 2022/22**

(21) Numéro de dépôt: **19748865.3**

(22) Date de dépôt: **27.06.2019**

(51) Classification Internationale des Brevets (IPC):
*F16C 43/02* (2006.01)  *F16C 17/02* (2006.01)
*F16C 27/02* (2006.01)  *F16C 33/10* (2006.01)

(52) Classification Coopérative des Brevets (CPC):
**F16C 17/024; F16C 27/02; F16C 43/02;**
F16C 2240/40; F16C 2360/24

(86) Numéro de dépôt international:
**PCT/FR2019/051587**

(87) Numéro de publication internationale:
**WO 2020/008127 (09.01.2020 Gazette 2020/02)**

(54) **DISPOSITIF FORMANT PALIER RADIAL AÉRODYNAMIQUE A FEUILLES ET PROCÉDÉ DE FABRICATION D'UN TEL DISPOSITIF**

VORRICHTUNG ZUM BILDEN EINES AERODYNAMISCHEN RADIALEN FOLIENLAGERS UND VERFAHREN ZUR HERSTELLUNG EINER SOLCHEN VORRICHTUNG

DEVICE FORMING AN AERODYNAMIC FOILS RADIAL BEARING AND METHOD OF MANUFACTURING SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.07.2018 FR 1856097**

(43) Date de publication de la demande:
**12.05.2021 Bulletin 2021/19**

(73) Titulaire: **Liebherr-Aerospace Toulouse SAS 31200 Toulouse (FR)**

(72) Inventeurs:
• **DELFOSSE, Frédéric**
  **31016 Toulouse Cedex 2 (FR)**
• **GRAU, Grégory**
  **31016 Toulouse Cedex 2 (FR)**

(74) Mandataire: **Bringer IP**
  **1, Place du Président Thomas Wilson**
  **31000 Toulouse (FR)**

(56) Documents cités:
**WO-A1-2005/073572**  **WO-A1-2006/014659**
**JP-U- S57 109 322**  **US-A- 5 911 510**

**Description**

**1. Domaine technique de l'invention**

Le domaine technique de l'invention est celui des paliers à air, aussi désignés par les termes de paliers aérodynamiques. L'invention concerne plus particulièrement les paliers à feuilles pour turbomachine et s'étend aux turbomachines équipées de tels paliers à feuilles. L'invention concerne également un procédé de fabrication d'un tel palier à feuilles.

**2. Arrière-plan technologique**

Un palier à feuilles est un palier formé d'une pluralité de feuilles, généralement métalliques, qui permettent de porter un arbre d'une machine tournante telle qu'une turbomachine. Un palier à feuilles est en général formé d'au moins une feuille supérieure, couramment désignée par la dénomination anglaise de « *top foil* », qui fait face à l'arbre en rotation, et d'au moins une feuille ondulée couramment désignée par la dénomination anglaise de « *bump foil* » qui est agencée sous la feuille supérieure et qui fait office de raidisseur et d'amortisseur. L'ensemble formé de la feuille supérieure et de la feuille ondulée, est monté sur un carter ou fourreau. Dans toute la suite, on désigne par fourreau la pièce qui reçoit le palier à feuilles, étant entendu que cette pièce peut également être un carter, auquel cas le palier est direction monté dans le carter de la machine.

Il existe différentes solutions techniques pour fixer et maintenir un palier à feuilles dans un fourreau (ou carter) qui relèvent soit des systèmes démontables, c'est-à-dire que le palier formé de la feuille supérieure et de la feuille ondulée est glissé dans une encoche formée dans le fourreau et peut donc en être retirée, soit des systèmes indémontables, c'est-à-dire que le palier formé de la feuille supérieure et de la feuille ondulée est soudé au fourreau, et ne peut donc pas être séparé du fourreau une fois fixé à ce dernier.

Par exemple, la demande EP0490443 décrit un tel palier à feuilles non démontable et les demandes EP0601624 et FR2700821 décrivent des paliers à feuilles démontables comprenant des languettes de feuilles montées en force dans le fourreau.

Quelles que soient les solutions proposées, démontables ou non démontables, ces solutions connues limitent en général l'utilisation du palier à un sens de rotation privilégiée. En effet, quel que soit le mode de fixation du palier au fourreau, une extrémité de l'ensemble formé de la feuille supérieure et de la feuille ondulée est fixée au fourreau et l'autre extrémité est laissée libre, de manière à permettre la formation du jeu radial nécessaire à la rotation de l'arbre une fois ce dernier logé dans le palier.

Il est donc nécessaire que l'arbre tourne de telle sorte qu'il pousse l'extrémité libre de la feuille supérieure vers l'extrémité fixe. En effet, dans le cas contraire, l'arbre entrainerait avec lui l'extrémité libre de la feuille qui viendrait alors se refermer sur l'arbre et provoquer un phénomène de serrage bloquant le fonctionnement du palier.

Il est donc nécessaire avec la plupart des solutions actuelles d'équiper les paliers de moyens détrompeurs, c'est-à-dire de moyens permettant d'éviter les erreurs de montage de l'arbre dans le palier, en fonction du sens privilégié de fonctionnement du palier.

Il existe également quelques solutions qui permettent de former un palier à feuilles bidirectionnel. Par exemple, la demande de brevet US2002054718 décrit un tel palier bidirectionnel qui ne nécessite donc pas la présence de moyens détrompeurs. Cette solution spécifique met en œuvre une pluralité de feuilles ondulées et une pluralité de feuilles supérieures fixées sur la périphérie intérieure du fourreau pour former une pluralité de secteurs formés chacun d'une feuille supérieure et d'une feuille ondulée.

Dans le cas des systèmes démontables, les opérations d'usinage des encoches spécifiques pour recevoir et maintenir les feuilles sont complexes et couteuses. En effet, ces opérations nécessitent en général un usinage par électroérosion, ce qui nécessite donc des outillages spécifiques et/ou de recourir à des partenaires qualifiés extérieurs.

WO 2006/014659 A1, WO 2005/073572 A1, JP S57 109322 U et US 5 911 510 A divulguent chacuns des dispositifs formant palier radial dynamique à feuilles dans lequel les languettes radiales des garnitures ne sont pas logées librement dans des encoches.

Les inventeurs ont donc cherché à développer un nouveau dispositif formant palier à feuilles qui peut fonctionner dans les deux sens de rotation, tout en pouvant être mis en œuvre avec des feuilles ondulées classiques non spécifiques.

Les inventeurs ont également cherché à développer une solution qui peut être mise en œuvre sans difficultés particulières et sans imposer le recours à des techniques complexes et couteuses.

**3. Objectifs de l'invention**

L'invention vise à fournir un dispositif formant palier radial aérodynamique à feuilles qui pallie au moins certains des inconvénients des paliers connus.

L'invention vise en particulier à fournir, dans au moins un mode de réalisation, un dispositif palier radial aérodynamique à feuilles qui ne nécessite pas la présence de moyens détrompeurs, c'est-à-dire dont le sens de montage est indifférent.

L'invention vise également à fournir, dans au moins un mode de réalisation, un tel dispositif qui ne nécessite pas des opérations complexes d'usinage lors de sa fabrication.

L'invention vise aussi à fournir un procédé de fabrication d'un palier aérodynamique à feuilles selon l'invention.

L'invention vise en particulier à fournir, dans au moins un mode de réalisation de l'invention, un tel procédé de fabrication qui puisse être simplement mis en œuvre sans le recours à des techniques complexes et/ou couteuses de fabrication.

**4. Exposé de l'invention**

Pour ce faire, l'invention concerne un dispositif formant palier radial aérodynamique à feuilles comprenant un fourreau cylindrique s'étendant le long d'une direction, dite direction longitudinale, et présentant une surface intérieure qui définit un alésage central.

Un dispositif selon l'invention est caractérisé en ce qu'il comprend en outre :

- au moins une encoche longitudinale formée dans ledit fourreau cylindrique et débouchant radialement dans ledit alésage central par une ouverture,
- une première garniture intérieure périphérique, dite garniture ondulée, comprenant au moins une feuille métallique équipée de saillies radiales, dite feuille ondulée, ladite garniture ondulée formant un galbe principal logé dans ledit alésage central, portant lesdites saillies agencé en regard de ladite surface intérieure dudit fourreau cylindrique pour former une garniture élastiquement déformable, chaque feuille ondulée présentant, à chaque extrémité, une languette radiale, dite languette radiale ondulée, logée librement dans une encoche longitudinale,
- une deuxième garniture intérieure périphérique, dite garniture supérieure, comprenant au moins une feuille métallique, dite feuille supérieure, ladite garniture supérieure formant un galbe principal logé dans ledit alésage central et agencé en regard dudit galbe principal de ladite garniture ondulée pour délimiter une enceinte de réception d'un arbre d'une machine tournante, chaque feuille supérieure présentant, à chaque extrémité, une languette radiale, dite languette radiale supérieure, logée librement dans une encoche longitudinale.

Un dispositif selon l'invention est donc formé d'un fourreau cylindrique qui reçoit ladite garniture ondulée et ladite garniture supérieure. Le fourreau comprend au moins une encoche longitudinale qui peut être obtenue par un procédé d'usinage conventionnel, tel que le perçage. Cette encoche longitudinale débouche dans l'alésage central de réception des garnitures par une ouverture. Aussi, les extrémités radiales des feuilles des garnitures logées dans l'alésage central peuvent être insérées librement dans une encoche longitudinale, en passant par l'ouverture de cette encoche.

L'une des particularités d'un dispositif selon l'invention est donc le montage libre des languettes radiales des feuilles des garnitures ondulée et supérieure dans une encoche longitudinale.

Un montage libre des languettes radiales dans les encoches longitudinales signifie que les languettes ne sont pas solidarisées au fourreau et peuvent donc se déplacer librement à l'intérieur des encoches en fonction des sollicitations extérieures qui résultent notamment de la rotation de l'arbre, lorsque ce dernier est logé dans le palier à feuilles selon l'invention. En outre, les languettes étant librement logées dans les encoches, elles viennent en butée contre une paroi de l'encoche longitudinale lorsque l'arbre logé dans le palier tourne dans un premier sens de rotation et se déplacent selon la direction azimutale vers le centre de l'encoche lorsque l'arbre tourne dans le sens inverse de rotation. Le montage des feuilles dans les encoches consiste uniquement à agencer les languettes radiales dans les encoches, sans nécessiter de solidariser les feuilles dans les encoches du fourreau. Les languettes radiales ne sont pas fixées au fourreau, ni montées en contrainte dans les encoches du fourreau.

Ce montage libre permet non seulement de faciliter les opérations de fabrication du palier à feuilles et les opérations de montage du palier, mais il permet également de faire fonctionner le palier dans les deux sens de rotation. En effet, les feuilles des garnitures ondulée et supérieure sont bloquées d'un côté de l'encoche longitudinale et libres du côté opposé lorsque l'arbre logé dans le palier tourne dans un premier sens de rotation. Lorsque l'arbre tourne dans le sens inverse, les languettes se déplacent librement dans l'encoche selon une direction azimutale pour que les languettes radiales préalablement libres viennent maintenant se bloquer contre les parois de l'encoche longitudinale et que les languettes radiales préalablement bloquées contre la paroi opposée de l'encoche soient maintenant libres dans l'encoche.

Un dispositif formant palier selon l'invention combine donc les avantages d'une fabrication simplifiée et d'un fonctionnement bidirectionnel.

Le blocage des feuilles contre les parois de l'encoche résulte de la géométrie spécifique des feuilles et de l'encoche longitudinale.

Avantageusement et selon l'invention, ladite encoche longitudinale comprend en outre, de part et d'autre de ladite ouverture, un dégagement azimutal et une surface de raccordement à ladite surface intérieure dudit fourreau cylindrique comprenant au moins un segment longitudinal agencé entre ledit dégagement azimutal et ladite ouverture, formant une butée azimutale ponctuelle de ladite languette radiale d'une feuille ondulée logée dans cette encoche, l'extrémité libre de ladite languette radiale s'étendant dans ledit dégagement azimutal en regard.

Cette variante avantageuse permet de former une ligne de contact ponctuel entre les languettes radiales et les parois de l'encoche longitudinale. En outre, la languette radiale s'étend dans un dégagement azimutal de sorte que la languette radiale rentre en contact mécanique avec la ligne de contact de l'encoche longitudinale au niveau d'une section non extrémale de la languette. En effet, l'extrémité radiale de la languette radiale s'étend dans le dégagement azimutal et n'est donc pas en contact avec les parois de l'encoche longitudinale. Cela permet de garantir que la languette radiale ne va pas glisser sur la paroi de l'encoche, ni se bloquer dans l'encoche.

Selon cette variante avantageuse, l'encoche longitudinale comprend un dégagement azimutal et un segment de contact de chaque côté de l'encoche.

De préférence et selon l'invention, le dispositif présente un plan de symétrie longitudinal. Ce plan de symétrie passe avantageusement par le centre des encoches longitudinales formées dans le fourreau cylindrique.

Cette symétrie permet notamment de former un dispositif ne nécessitant pas de moyens de détrompage. Un tel palier peut ainsi fonctionner dans les deux sens de rotation, sans aucun sens de rotation privilégié.

Avantageusement et selon l'invention, chaque encoche longitudinale présente une largeur *Le* inférieure, d'un facteur proportionnel *k1* à la distance *Dbump* séparant les saillies de la garniture ondulée agencées sur le galbe principal de part et d'autre de cette encoche longitudinale et supérieure, d'un facteur proportionnel *k2,* à la somme des épaisseurs des languettes radiales des feuilles supérieure et ondulée logées dans cette encoche, lorsqu'un arbre d'une machine tournante est inséré dans ladite enceinte de réception délimitée par ladite feuille supérieure.

En d'autres termes et selon cette variante de l'invention, la largeur *Le* d'une encoche est liée à la distance *Dbump* séparant les saillies de la garniture ondulée et aux épaisseurs EPL des languettes radiales logées dans l'encoche par la relation suivante :

$$k2.\sum EPL < Le < k1.Dbump$$

Cette inégalité permet de garantir que les saillies (ou bosses) de la garniture ondulée agencées de part et d'autre d'une encoche ne tombent pas dans l'encoche longitudinale.

Avantageusement et selon l'invention, le facteur proportionnel *k1* est égal ou inférieur à 0,8 et le facteur proportionnel *k2* est supérieur ou égal à 1,2.

Avantageusement et selon l'invention, pour au moins une encoche longitudinale, la distance *d3* séparant les languettes radiales supérieures logées dans cette encoche est inférieure, d'un facteur proportionnel *k3* à leur épaisseur et supérieure, d'un facteur proportionnel *k4,* à leur épaisseur, lorsqu'un arbre d'une machine tournante est inséré dans ladite enceinte de réception délimitée par ladite feuille supérieure.

En d'autres termes et selon cette variante de l'invention, la distance *d3* séparant les languettes radiales supérieures est liée à l'épaisseur d'une languette radiale supérieure *ELRS* par la relation suivante :

$$k4.ELRS < d3 < k3.ELRS$$

Cette inégalité permet de garantir que l'arbre de la machine tournante destiné à être porté par le palier selon l'invention peut y être logé librement.

Avantageusement et selon l'invention, ledit facteur proportionnel *k3* est supérieur ou égal à 8 et le facteur proportionnel *k4* est inférieur ou égal à 3.

Avantageusement et selon l'invention, pour au moins une encoche longitudinale, la distance *d1* séparant une languette radiale supérieure logée dans cette encoche et une languette radiale ondulée logée dans cette encoche est inférieure, d'un facteur proportionnel *k5* à l'épaisseur de la languette radiale supérieure logée dans cette encoche et supérieure, d'un facteur proportionnel *k6,* à l'épaisseur de la languette radiale supérieure logée dans cette encoche, lorsqu'un arbre d'une machine tournante est inséré dans ladite enceinte de réception délimitée par ladite feuille supérieure.

En d'autres termes et selon cette variante de l'invention, la distance *d1* séparant une languette radiale supérieure logée dans une encoche et la languette radiale ondulée de cette cochée est liée à l'épaisseur d'une languette radiale supérieure *ELRS* par la relation suivante :

$$k6.ELRS < d1 < k5.ELRS$$

Cette inégalité permet de garantir que la garniture ondulée ne contraint pas la garniture supérieure.

Avantageusement et selon l'invention, ledit facteur proportionnel k5 est supérieur ou égal à 8 et le facteur proportionnel k6 est inférieur ou égal à 3.

Avantageusement et selon l'invention, le dispositif présente un jeu radial, lorsqu'un arbre d'une machine tournante est inséré dans ladite enceinte de réception délimitée par ladite garniture supérieure, supérieur d'un facteur proportionnel k7, à l'épaisseur d'une feuille supérieure, et inférieur d'un facteur proportionnel k8, à l'épaisseur d'une feuille supérieure.

En d'autres termes et selon cette variante de l'invention, le jeu radial *jr* est lié à l'épaisseur d'une feuille supérieure *ELS* par la relation suivante :

$$k7.ELS < jr < k8.ELS$$

Avantageusement et selon l'invention, ledit facteur proportionnel *k7 est* égal à 0 et ledit facteur proportionnel *k8* est inférieur à 2, et notamment compris entre 0,5 et 1,8.

Les facteurs proportionnels utilisés dépendent notamment du diamètre de l'arbre de la machine tournante insérée dans le palier et de la machine tournante considérée.

Avantageusement et selon l'invention, au moins une feuille ondulée comprend une feuille métallique lisse, dite feuille support, et une pluralité de feuilles métalliques équipées de saillies solidarisées à ladite feuille support.

Avantageusement et selon l'invention, le dispositif comprend une unique encoche longitudinale, une garniture ondulée formée d'une seule feuille ondulée, une garniture supérieure formée d'une seule feuille supérieure, de sorte que les languettes radiales des feuilles supérieure et ondulée sont toutes logées librement dans la même encoche.

Selon d'autres variantes, la garniture ondulée peut comprendre N feuilles ondulées et la garniture supérieure peut comprendre M feuilles supérieures. D'une manière générale, différentes configurations sont possibles en fonction du nombre d'encoches longitudinales, avec la seule contrainte que le nombre de feuilles ondulées doit être supérieur ou égal au nombre de feuilles supérieures. En d'autres termes, il faut que N soit supérieur ou égal à M étant donné que les feuilles supérieures recouvrent les feuilles ondulées et que les languettes radiales des feuilles supérieures et ondulées sont logées librement dans des encoches longitudinales.

Avantageusement et selon l'invention, le dispositif comprend au moins un moyen de blocage axial desdites garnitures ondulée et supérieure.

Un tel moyen de blocage est par exemple un anneau élastique du type circlip dont les extrémités viennent se loger dans un cran d'arrêt ménagé dans le fourreau. Un tel anneau élastique présente avantageusement un diamètre intérieur légèrement supérieur au diamètre intérieur du fourreau de telle sorte que l'anneau ne vienne pas créer une restriction, de passage d'air ou de gaz sous les feuilles du palier.

L'invention concerne également un procédé de fabrication d'un dispositif formant palier radial aérodynamique à feuilles comprenant les étapes consistant à :

- usiner un alésage central s'étendant le long d'une direction, dite direction longitudinale, dans un fourreau cylindrique, ledit alésage central étant délimité par une surface intérieure,
- usiner au moins une encoche longitudinale dans ledit fourreau cylindrique qui débouche radialement dans ledit alésage central,
- ménager une surface de raccordement entre ladite encoche longitudinale et la surface intérieure dudit fourreau,
- former une première garniture intérieure périphérique, dite garniture ondulée, à partir d'au moins une feuille métallique équipée de saillies radiales, dite feuille ondulée, et présentant, à chaque extrémité, une languette radiale, dite languette radiale ondulée, ladite garniture ondulée formant un galbe principal portant lesdites saillies agencé en regard de ladite surface intérieure dudit fourreau cylindrique pour former une garniture élastiquement déformable,
- loger librement chaque languette radiale ondulée dans une encoche longitudinale,
- former une deuxième garniture intérieure périphérique, dite garniture supérieure, à partir d'au moins une feuille métallique, dite feuille supérieure, ladite garniture supérieure formant un galbe principal agencé en regard dudit galbe principal de ladite garniture ondulée pour délimiter une enceinte de réception d'un arbre d'une machine tournante, chaque feuille supérieure présentant, à chaque extrémité, une languette radiale, dite languette radiale supérieure,
- loger librement chaque languette radiale supérieure dans une encoche longitudinale.

Les avantages d'un dispositif formant palier aérodynamique à feuilles selon l'invention s'appliquent *mutatis mutandis* à un procédé de fabrication selon l'invention.

Avantageusement et selon l'invention, l'étape consistant à usiner au moins une encoche longitudinale dans ledit fourreau cylindrique qui débouche radialement dans ledit alésage central comprend en outre l'étape consistant à usiner, de part et d'autre de ladite ouverture, un dégagement azimutal et une surface de raccordement à ladite surface intérieure dudit fourreau cylindrique comprenant au moins un segment longitudinal agencé entre ledit dégagement azimutal et ladite ouverture, formant une butée azimutale ponctuelle de ladite languette radiale d'une feuille ondulée logée dans cette encoche, l'extrémité libre de ladite languette radiale s'étendant dans ledit dégagement azimutal.

L'invention concerne également un dispositif formant palier radial et un procédé de fabrication d'un tel dispositif caractérisés en combinaison par tout ou partie des caractéristiques mentionnées ci-dessus ou ci-après.

## 5. Liste des figures

D'autres buts, caractéristiques et avantages de l'invention apparaîtront à la lecture de la description suivante donnée à titre uniquement non limitatif et qui se réfère aux figures annexées dans lesquelles :

- la figure 1 est une vue schématique en coupe d'un dispositif formant palier radial aérodynamique à feuilles selon un mode de réalisation de l'invention,
- la figure 2 est une vue schématique en coupe d'un dispositif formant palier radial aérodynamique à feuilles selon un autre mode de réalisation de l'invention,
- la figure 3 est une vue schématique détaillée de l'encoche du dispositif de la figure 2,
- la figure 4 est une vue schématique en coupe d'un dispositif formant palier radial aérodynamique à feuilles selon un autre mode de réalisation de l'invention,
- la figure 5 est une vue schématique détaillée de l'encoche du dispositif de la figure 4,

- la figure 6 est une vue schématique en coupe d'un dispositif formant palier radial aérodynamique à feuilles selon un autre mode de réalisation de l'invention,
- la figure 7 est une vue schématique détaillée de l'encoche du dispositif de la figure 6.

## 6. Description détaillée d'un mode de réalisation de l'invention

Sur les figures, les échelles et les proportions ne sont pas strictement respectées et ce, à des fins d'illustration et de clarté. Dans toute la description détaillée qui suit en référence aux figures, sauf indication contraire, chaque élément du palier est décrit tel qu'il est agencé lorsqu'un arbre d'une turbomachine est logé dans le palier qui s'étend selon une direction principale, dite direction longitudinale. Les termes longitudinal ou axial sont utilisés en lien avec cette direction principale du palier, référencé X sur les figures. Le terme radial est utilisé en référence à cet axe principal. La direction azimutale Z est la direction orthogonale à la fois à la direction radiale R et à la direction longitudinale X. En d'autres termes, la direction longitudinale X, la direction radiale R et la direction azimutale Z correspondent respectivement aux directions définies par la côte, le rayon et l'angle dans un système de coordonnées cylindrique.

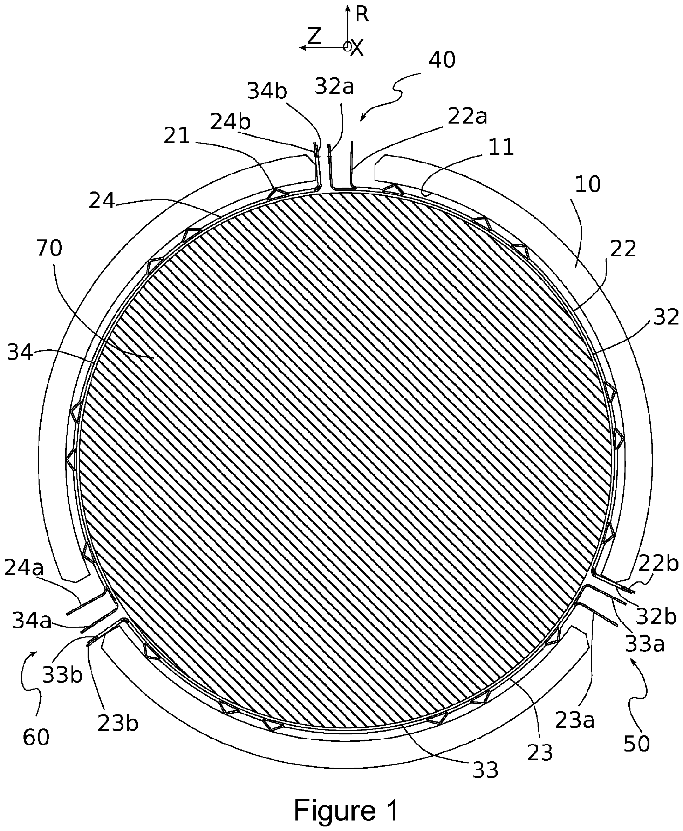

La figure 1 est une vue schématique d'un palier selon un premier mode de réalisation de l'invention qui porte un arbre 70 d'une machine tournante, qui peut être de tous types.

Sur les vues en coupe des figures 1 à 7 et aux fins d'alléger ces figures, seul l'arbre 70 est hachuré pour illustrer le fait que l'arbre est représenté en coupe, étant entendu que les autres éléments représentés sur les figures (fourreau, garniture ondulée et garniture supérieure notamment) sont également représentés en coupe.

Ce palier comprend un fourreau 10 cylindrique qui présente une surface intérieure 11 qui définit un alésage de réception d'une garniture ondulée (représenté sur la figure 1 par les feuilles ondulées 22, 23, 24 décrites ci-après) et d'une garniture supérieure (représenté sur la figure 1 par les feuilles supérieures 32, 33, 34 décrites ci-après).

Le fourreau 10 cylindrique comprend en outre trois encoches longitudinales 40, 50, 60 réparties sur le fourreau 10.

La garniture ondulée du palier de la figure 1 comprend trois feuilles ondulées 22, 23, 24 métalliques. Chaque feuille ondulée métallique est équipée de saillies radiales 21 qui sont orientées vers la surface intérieure 11 du fourreau cylindrique 10 pour former ensemble une garniture élastiquement déformable. Selon d'autres modes de réalisation, les saillies peuvent être orientées vers la garniture supérieure. Sur les figures, seule une saillie est référencée à des fins de clarté. Le nombre de saillies 21 et leur forme peuvent être de tous types.

Chaque feuille ondulée 22, 23, 24 est formée par une feuille métallique galbée de telle sorte que ce galbe épouse la forme de la surface intérieure 11 du fourreau 10 et présente à chacune de ces deux extrémités des languettes radiales, référencées respectivement 22a, 22b, 23a, 23b, 24a, 24b. Les languettes radiales forment un angle prédéterminé avec le galbe de la feuille ondulée de telle sorte que les languettes peuvent s'étendre radialement alors que le galbe suit la courbure de la surface intérieure 11 du fourreau 10. Cet angle des languettes par rapport au galbe de la feuille est par exemple de l'ordre de 95°. D'autres valeurs d'angles peuvent être utilisées, en particulier des angles compris entre 90° et 110°.

Les languettes radiales 22a, 22b, 23a, 23b, 24a, 24b des feuilles ondulées 22, 23, 24 sont logées librement dans les encoches longitudinales 40, 50, 60.

Plus particulièrement, la feuille ondulée 22 présente une première languette radiale 22a logée librement dans l'encoche 40 et une deuxième languette radiale 22b logée librement dans l'encoche 50.

La feuille ondulée 23 présente une première languette radiale 23a logée librement dans l'encoche 50 et une deuxième languette radiale 23b logée librement dans l'encoche 60.

La feuille ondulée 24 présente une première languette radiale 24a logée librement dans l'encoche 60 et une deuxième languette radiale 24b logée librement dans l'encoche 40.

La garniture supérieure est également formée de trois feuilles métalliques 32, 33, 34. A noter que selon d'autres modes de réalisation, la garniture supérieure peut être formée d'une seule feuille métallique ou de deux feuilles si la garniture ondulée est formée de trois feuilles ondulées. La seule contrainte de réalisation est que le nombre de feuilles supérieures soit inférieur ou égal au nombre de feuilles ondulées et que le nombre de feuilles ondulées soit inférieur ou égal au nombre d'encoches longitudinales ménagées dans le fourreau 10.

Chaque feuille supérieure 32, 33, 34 est formée par une feuille métallique galbée de telle sorte que ce galbe épouse la forme du galbe de la feuille ondulée en regard, qui épouse elle-même la forme de la surface intérieure 11 du fourreau 10. Chaque feuille supérieure présente à chacune de ces deux extrémités des languettes radiales, référencées respectivement 32a, 32b, 33a, 33b, 34a, 34b. Les languettes radiales forment un angle prédéterminé avec le galbe de la feuille supérieure de telle sorte que les languettes puissent s'étendre radialement alors que le galbe suit la courbure du galbe de la feuille ondulée en regard. Cet angle des languettes par rapport au galbe de la feuille est par exemple de l'ordre de 95°. D'autres valeurs d'angles peuvent être utilisées, en particulier des angles compris entre 90° et 110°.

Les languettes radiales 32a, 32b, 33a, 33b, 34a, 34b des feuilles supérieures 32, 33, 34 sont logées librement dans les encoches longitudinales 40, 50, 60.

Plus particulièrement, la feuille supérieure 32 présente une première languette radiale 32a logée librement dans l'encoche 40 et une deuxième languette radiale 32b logée librement dans l'encoche 50.

La feuille ondulée 33 présente une première languette radiale 33a logée librement dans l'encoche 50 et une deuxième languette radiale 33b logée librement dans l'encoche 60.

La feuille ondulée 34 présente une première languette radiale 34a logée librement dans l'encoche 60 et une deuxième languette radiale 34b logée librement dans l'encoche 40.

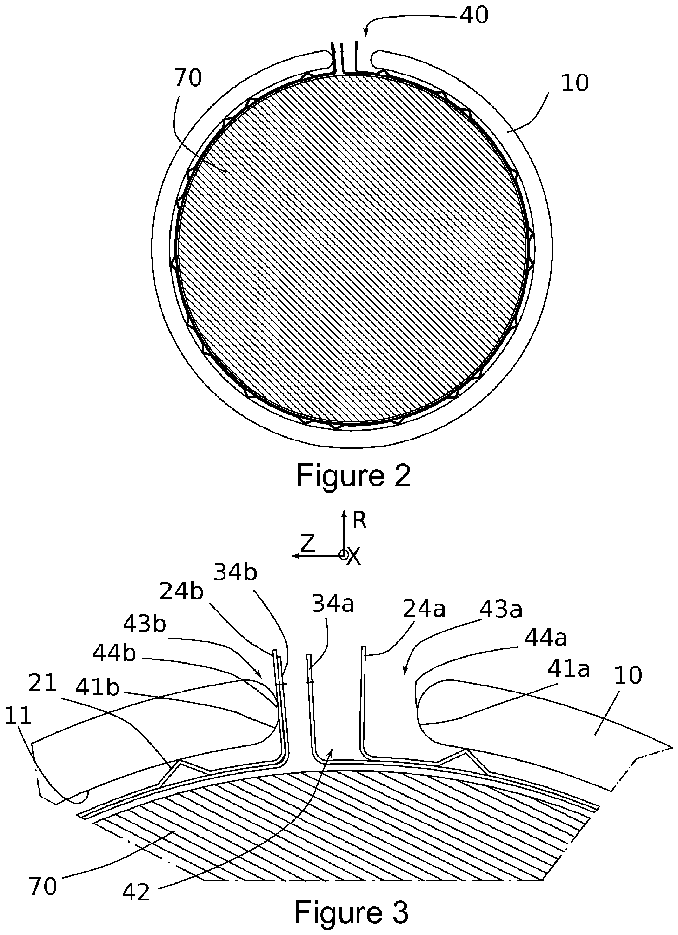

Les figures 2 à 7 illustrent d'autres modes de réalisation de l'invention dans lesquels la garniture ne présente qu'une seule encoche longitudinale.

Dans toute la suite et en lien avec les figures 2 à 7, les même références que celles utilisées en lien avec l'encoche longitudinale 40 de la figure 1 sont utilisées pour faciliter la compréhension, étant entendu qu'il s'agit de modes de réalisation différents de celui de la figure 1. En outre, dans le mode de réalisation, des figures 2 à 7, la garniture ondulée est formée d'une seule feuille ondulée 24 et la garniture supérieure 30 est formée d'une seule feuille supérieure 34.

La principale différence entre les modes de réalisation des figures 2, 4 et 6 tient à la forme des surfaces de raccordement 41a, 41b de l'encoche longitudinale 40.

En particulier, l'encoche longitudinale 40 comprend, de part et d'autre de son ouverture 42, un dégagement azimutal 43a, 43b et une surface de raccordement 41a, 41b à la surface intérieure 11 du fourreau 10 cylindrique.

Cette encoche longitudinale 40 est de préférence symétrique par rapport à un plan longitudinal. En outre, chaque surface de raccordement 41a, 41b est configurée de telle sorte qu'elle forme un segment longitudinal 44a, 44b agencé entre le dégagement azimutal 43a, 43b et l'ouverture 42 pour former une butée azimutale ponctuelle de la languette radiale d'une feuille ondulée logée dans l'encoche 40. Une butée azimutale ponctuelle est une butée qui empêche le déplacement des languettes radiales selon la direction azimutale, c'est-à-dire selon une direction perpendiculaire à la direction longitudinale et à la direction radiale. En outre, cette butée azimutale longitudinale est ponctuelle, c'est-à-dire qu'elle est localisée sur un axe longitudinal de la surface de raccordement. Lorsque les languettes radiales sont logées dans l'encoche 40, les extrémités des languettes peuvent s'étendre librement dans le dégagement azimutal.

Ainsi, selon le mode de réalisation représentée sur les figures 2, 4 et 6, et leurs détails des figures 3, 5 et 7, la languette radiale 24b vient en butée azimutale contre le segment 44b de la surface de raccordement 41b.

Bien évidemment, lorsque l'arbre tourne dans l'autre sens de rotation, c'est la languette radiale 24a de la feuille ondulée qui vient en butée azimutale contre le segment 44a de la surface de raccordement 41a de l'encoche longitudinale 40.

Sur les figures 2 et 3, la surface de raccordement est arrondie de sorte que le segment 44a, 44b formant une butée azimutale ponctuelle est une génératrice de la surface arrondie formant la surface de raccordement.

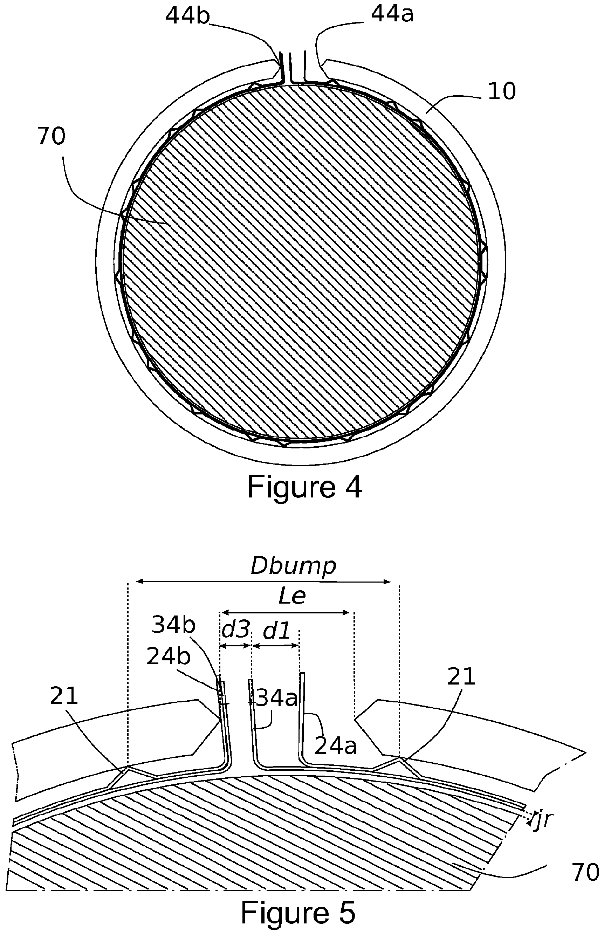

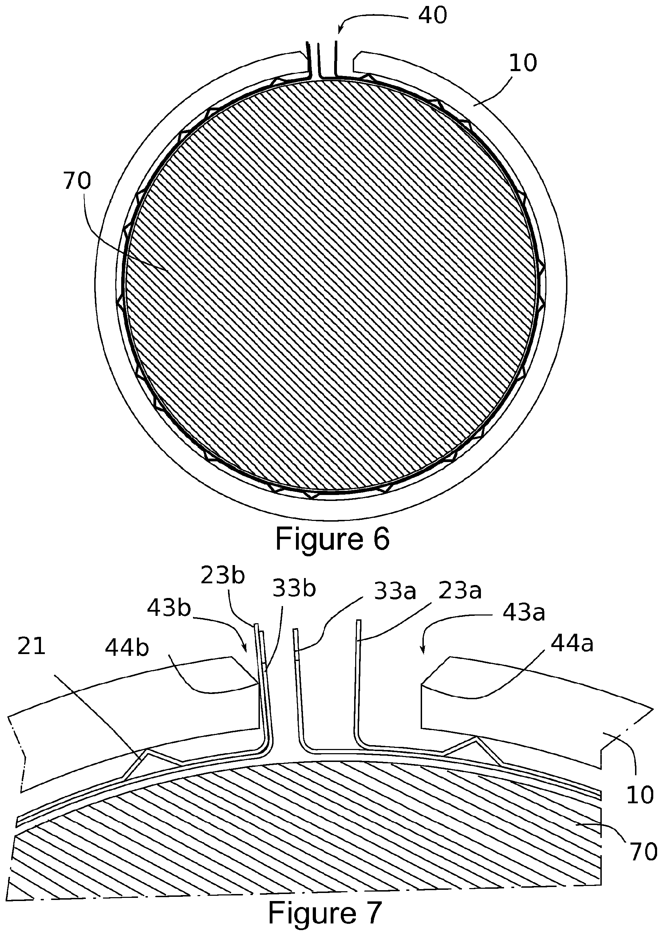

Sur les figures 4, 5, 6 et 7 les segments 44a, 44b formant une butée azimutale ponctuelle sont des arêtes. Chaque arête peut être formée par deux surfaces formant entre elles un angle $\alpha$ de l'ordre de 90°, comme sur les figures 4 et 5 ou, de l'ordre de 120° comme sur les figures 6 et 7. Bien entendu, d'autres angles sont possibles, sans que cela ne remette en cause l'objet de l'invention.

Selon le mode de réalisation des figures (et tel que représenté plus précisément sur la figure 5) l'encoche longitudinale 40 présente une largeur $Le$ inférieure, d'un facteur proportionnel $k1$ (qui est par exemple fixé à 0,8), à la distance $Dbump$ qui séparent les saillies 21 de la garniture ondulée, et supérieure, d'un facteur proportionnel $k2$ (qui est par exemple fixé à 1,2) à la somme des épaisseurs des languettes radiales des feuilles supérieure et ondulée logées dans l'encoche 40.

En outre, et selon le mode de réalisation des figures, la distance $d3$ qui sépare les languettes radiales supérieures 34a, 34b logées dans l'encoche 40 est inférieure, d'un facteur proportionnel $k3$ (qui est par exemple fixé à 8) à leur épaisseur, et supérieure d'un facteur proportionnel $k4$ (qui est par exemple fixé à 3) à leur épaisseur.

En outre et selon le mode de réalisation des figures, la distance $d1$ qui sépare une languette radiale 34a supérieure logée dans l'encoche 40 et une languette radiale ondulée 24a, logée dans cette encoche est inférieure, d'un facteur proportionnel $k5$ (qui est par exemple fixé à 8) à l'épaisseur de la languette radiale supérieure 34a logée dans l'encoche 40, et supérieure d'un facteur proportionnel $k6$ (qui est par exemple fixé à 3), à l'épaisseur de la languette radiale supérieure 34a logée dans cette encoche 40.

Enfin, le dispositif selon l'invention comprend avantageusement un jeu radial $jr,$ supérieur d'un facteur proportionnel $k7$ (qui est par exemple fixé à 0), à l'épaisseur d'une feuille supérieure, et inférieur d'un facteur proportionnel $k8$ (qui est par exemple fixé à 1,5, à l'épaisseur d'une feuille supérieure.

En d'autres termes, et tel que représenté sur la figure 5, le jeu radial, une fois que l'arbre 70 est logé dans le palier de l'invention, est de préférence compris entre 0 et une fois et demi l'épaisseur de la feuille supérieure.

Ce jeu radial entre l'arbre 70 et les feuilles résulte de la chaine de côte prenant en compte le diamètre de l'arbre 70, le diamètre intérieur du fourreau 10, la hauteur des saillies 21 des feuilles ondulées et l'épaisseur des feuilles.

**Revendications**

1. Dispositif formant palier radial aérodynamique à feuilles comprenant un fourreau (10) cylindrique s'étendant le long d'une direction, dite direction longitudinale (X), et présentant une surface intérieure (11) qui définit un alésage central, **caractérisé en ce qu'**il comprend en outre :

   - au moins une encoche longitudinale (40, 50, 60) formée dans ledit fourreau cylindrique (20) et débouchant radialement dans ledit alésage central par une ouverture (42),
   - une première garniture intérieure périphérique, dite garniture ondulée, comprenant au moins une feuille métallique équipée de saillies (21) radiales, dite feuille ondulée (22, 23, 24), ladite garniture ondulée formant un galbe principal logé dans ledit alésage central et portant lesdites saillies (21) agencé en regard de ladite surface intérieure (11) dudit fourreau cylindrique (10) pour former une garniture élastiquement déformable, chaque feuille ondulée (22, 23, 24) présentant, à chaque extrémité, une languette radiale, dite languette radiale ondulée (22a, 22b, 23a, 23b, 24a, 24b), logée librement dans une encoche longitudinale (40, 50, 60),
   - une deuxième garniture intérieure périphérique, dite garniture supérieure, logée dans ledit alésage central et comprenant au moins une feuille métallique, dite feuille supérieure (32, 33, 34), ladite garniture supérieure formant un galbe principal logé dans ledit alésage central et agencé en regard dudit galbe principal de ladite garniture ondulée pour délimiter une enceinte de réception d'un arbre (70) d'une machine tournante, chaque feuille supérieure (32, 33, 34) présentant, à chaque extrémité, une languette radiale, dite languette radiale supérieure (32a, 32b, 33a, 33b, 34a, 34b), logée librement dans une encoche longitudinale (40, 50, 60).

2. Dispositif selon la revendication 1, **caractérisé en ce qu'**au moins une encoche longitudinale (40, 50, 60) comprend en outre, de part et d'autre de ladite ouverture (42), un dégagement azimutal (43a, 43b) et une surface de raccordement (44a, 44b) à ladite surface intérieure (11) dudit fourreau cylindrique (10) comprenant au moins un segment longitudinal (44a, 44b) agencé entre ledit dégagement azimutal (43a, 43b) et ladite ouverture (42), formant une butée azimutale ponctuelle de ladite languette radiale (22a, 22b, 23a, 23b, 24a, 24b) d'une feuille ondulée (22, 23, 24) logée dans cette encoche (40, 50, 60), l'extrémité libre de ladite languette radiale (22a, 22b, 23a, 23b, 24a, 24b) s'étendant dans ledit dégagement azimutal.

3. Dispositif formant palier selon l'une des revendications 1 ou 2, **caractérisé en ce que** chaque encoche longitudinale (40, 50, 60) présente une largeur $Le$ inférieure, d'un facteur proportionnel $k1$ à la distance $Dbump$ séparant les saillies (41) de la garniture ondulée agencées sur le galbe principal de part et d'autre de cette encoche longitudinale (40, 50, 60) et supérieure, d'un facteur proportionnel $k2$, à la somme des épaisseurs des languettes radiales des feuilles supérieures (32, 33, 34) et ondulées (22, 23, 24) logées dans cette encoche, lorsqu'un arbre (70) d'une machine tournante est inséré dans ladite enceinte de réception délimitée par ladite feuille supérieure.

4. Dispositif selon la revendication 3, **caractérisé en ce que** le facteur proportionnel $k1$ est égal ou inférieur à 0,8 et le facteur proportionnel $k2$ est supérieur ou égal à 1,2.

5. Dispositif formant palier selon l'une des revendications 1 à 4, **caractérisé en ce que**, pour au moins une encoche longitudinale (40, 50, 60), la distance $d3$ séparant les languettes radiales supérieures (32a, 32b, 33a, 33b, 34a, 34b) logées dans cette encoche (40, 50, 60) est inférieure, d'un facteur proportionnel $k3$ à leur épaisseur et supérieure, d'un facteur proportionnel $k4$, à leur épaisseur, lorsqu'un arbre (70) d'une machine tournante est inséré dans ladite enceinte de réception délimitée par ladite feuille supérieure (32, 33, 34).

6. Dispositif selon la revendication 5, **caractérisé en ce que** ledit facteur proportionnel k3 est supérieur ou égal à 8 et le facteur proportionnel $k4$ est inférieur ou égal à 3.

7. Dispositif selon l'une des revendications 1 à 6, **caractérisé en ce que**, pour au moins une encoche longitudinale (40, 50, 60), la distance $d1$ séparant une languette radiale supérieure (32a, 32b, 33a, 33b, 34a, 34b) logée dans cette encoche (40, 50, 60) et une languette radiale ondulée (22a, 22b, 23a, 23b, 24a, 24b) logée dans cette encoche (40, 50, 60) est inférieure, d'un facteur proportionnel $k5$ à l'épaisseur de la languette radiale supérieure logée dans cette encoche et supérieure, d'un facteur proportionnel $k6$, à l'épaisseur de la languette radiale supérieure logée dans cette encoche, lorsqu'un arbre (70) d'une machine tournante est inséré dans ladite enceinte de réception délimitée par ladite feuille supérieure.

8. Dispositif selon la revendication 7, **caractérisé en ce que** ledit facteur proportionnel $k5$ est supérieur ou égal à 8 et le facteur proportionnel $k6$ est inférieur ou égal à 3.

**9.** Dispositif selon l'une des revendications 1 à 8, **caractérisé en ce qu'**il présente un jeu radial, lorsqu'un arbre (70) d'une machine tournante est inséré dans ladite enceinte de réception délimitée par ladite garniture supérieure, supérieur d'un facteur proportionnel k7, à l'épaisseur d'une feuille supérieure, et inférieur d'un facteur proportionnel k8, à l'épaisseur d'une feuille supérieure.

**10.** Dispositif selon la revendication 9, **caractérisé en ce que** ledit facteur proportionnel k7 est égal à 0 et ledit facteur proportionnel k8 est inférieur à 2.

**11.** Dispositif selon l'une des revendications 1 à 10, **caractérisé en ce que** chaque encoche longitudinale (40, 50, 60) présente un plan longitudinal de symétrie.

**12.** Dispositif selon l'une des revendications 1 à 11, **caractérisé en ce qu'**au moins une feuille ondulée (22, 23, 24) comprend une feuille métallique lisse, dite feuille de support, et une pluralité de feuilles métalliques équipées de saillies (21) solidarisées à ladite feuille de support.

**13.** Dispositif selon l'une des revendications 1 à 12, **caractérisé en ce qu'**il comprend une unique encoche longitudinale (40), une garniture ondulée formée d'une seule feuille ondulée (22), une garniture supérieure formée d'une seule feuille supérieure (32), de sorte que les languettes radiales des feuilles supérieure et ondulée sont toutes logées librement dans la même encoche (40).

**14.** Dispositif selon l'une des revendications 1 à 13, **caractérisé en ce qu'**il comprend au moins un moyen de blocage axial desdites garnitures ondulée et supérieure.

**15.** Procédé de fabrication d'un dispositif formant palier radial aérodynamique à feuilles selon la revendication 1 comprenant les étapes consistant à :

- usiner un alésage central s'étendant le long d'une direction, dite direction longitudinale, dans un fourreau (10) cylindrique, ledit alésage central étant délimité par une surface intérieure (11),
- usiner au moins une encoche longitudinale (40, 50, 60) dans ledit fourreau (10) cylindrique qui débouche radialement dans ledit alésage central,
- ménager une surface de raccordement (41a, 41b) entre ladite encoche longitudinale (40) et la surface intérieure (11) dudit fourreau (10),
- former une première garniture intérieure périphérique, dite garniture ondulée, à partir d'au moins une feuille métallique équipée de saillies (21) radiales, dite feuille ondulée (22, 23, 24), et présentant, à chaque extrémité, une languette radiale, dite languette radiale ondulée (22a, 22b, 23a, 23b, 24a, 24b), ladite garniture ondulée formant un galbe principal portant lesdites saillies agencé en regard de ladite surface intérieure (11) dudit fourreau (10) cylindrique pour former une garniture élastiquement déformable,
- loger librement chaque languette radiale ondulée (22a, 22b, 23a, 23b, 24a, 24b) dans une encoche longitudinale (40, 50, 60),
- former une deuxième garniture intérieure périphérique, dite garniture supérieure, à partir d'au moins une feuille métallique, dite feuille supérieure (32, 33, 34), ladite garniture supérieure formant un galbe principal agencé en regard dudit galbe principal de ladite garniture ondulée pour délimiter une enceinte de réception d'un arbre (70) d'une machine tournante, chaque feuille supérieure présentant, à chaque extrémité, une languette radiale, dite languette radiale supérieure (32a, 32b, 33a, 33b, 34a, 34b),
- loger librement chaque languette radiale supérieure (32a, 32b, 33a, 33b, 34a, 34b) dans une encoche longitudinale (40, 50, 60).

**Patentansprüche**

**1.** Vorrichtung, die ein aerodynamisches Radiallager mit Blättern bildet, welche eine zylindrischen Hülse (10) umfasst, die sich entlang einer Richtung, der sogenannten Längsrichtung (X), erstreckt und eine Innenfläche (11) aufweist, die eine zentrale Bohrung definiert, **dadurch gekennzeichnet, dass** sie weiter umfasst:

- mindestens eine Längsnut (40, 50, 60), die in der zylindrischen Hülse (20) ausgebildet ist und durch eine Öffnung (42) radial in die zentrale Bohrung mündet,
- eine erste periphere innere Auskleidung, eine sogenannte gewellte Auskleidung, die mindestens ein Metallblech mit radialen Vorsprüngen (21), ein sogenanntes gewelltes Blatt (22, 23, 24), umfasst, worin die gewellte Auskleidung eine Hauptwölbung bildet, die in der zentralen Bohrung untergebracht ist und die Vorsprünge (21) trägt, die gegenüber der inneren Oberfläche (11) der zylindrischen Hülse (10) angeordnet sind, um eine elastisch verformbare Auskleidung auszubilden, worin jedes gewellte Blatt (22, 23, 24) an jedem Ende eine radiale Zunge, die sogenannte gewellte radiale Zunge (22a, 22b, 23a, 23b, 24a, 24b), aufweist, die frei in einer Längsnut (40, 50, 60) untergebracht ist,

eine zweite periphere innere Auskleidung, die sogenannte obere Auskleidung, die in der zentralen Bohrung untergebracht ist und mindestens ein Metallblech, das sogenannte obere Blatt (32, 33, 34), umfasst, wobei die obere Auskleidung eine Hauptwölbung bildet, die in der zentralen Bohrung untergebracht ist und gegenüber der Hauptwölbung der gewellten Auskleidung angeordnet ist, um einen Aufnahmeraum für eine Welle (70) einer Rotationsmaschine zu definieren, wobei jedes obere Blatt (32, 33, 34) an jedem Ende eine radiale Zunge aufweist, die als obere radiale Zunge (32a, 32b, 33a, 33b, 34a, 34b) bezeichnet wird und frei in einer Längsaussparung (40, 50, 60) sitzt.

2. Vorrichtung nach Anspruch 1, **dadurch gekennzeichnet, dass** mindestens eine Längsnut (40, 50, 60) außerdem auf beiden Seiten der Öffnung (42) einen azimutalen Freiraum ( 43a, 43b) und eine Verbindungsfläche (44a, 44b) zu der Innenfläche (11) der zylindrischen Hülse (10) aufweist, die mindestens ein Längssegment ( 44a, 44b) umfasst, das zwischen dem azimutalen Freiraum ( 43a, 43b) und der Öffnung ( 42) angeordnet ist, (40, 50, 60), und eine punktförmige azimutalen Stopper der radialen Zunge (22a, 22b, 23a, 23b, 24a, 24b) eines gewellten Blattes (22, 23, 24) ausbildet, die in der Längsnut aufgenommen ist, wobei das freie Ende der radialen Zunge (22a, 22b, 23a, 23b, 24a, 24b) in den azimutalen Abstand hineinragt.

3. Vorrichtung nach einem der Ansprüche 1 oder 2, **dadurch gekennzeichnet, dass** jede Längsnut (40, 50, 60) eine Breite *Le* aufweist, die um einen proportionalen Faktor *k1* kleiner ist als der Abstand *Dbump* zwischen den Vorsprüngen (41) der wellenförmigen Auskleidung, die auf der Hauptwölbung beiderseits der Längsnut (40, 50, 60) angeordnet sind, (50, 60) und um einen proportionalen Faktor *k2* größer als die Summe der Dicken der radialen Zungen der oberen (32, 33, 34) und gewellten (22, 23, 24) Blätter, die in der Nut untergebracht sind, wenn eine Welle (70) einer Rotationsmaschine in den durch das obere Blatt begrenzten Aufnahmeraum eingeführt wird.

4. Vorrichtung nach Anspruch 3, **dadurch gekennzeichnet, dass** der proportionale Faktor *k1* gleich oder kleiner als 0,8 ist und der proportionale Faktor *k2* größer oder gleich 1,2 ist.

5. Vorrichtung nach einem der Ansprüche 1 bis 4, **dadurch gekennzeichnet, dass** für mindestens eine Längsnut (40, 50, 60) der Abstand *d3* zwischen den oberen radialen Zungen (32a, 32b, 33a, 33b, 34a, 34b), die in der Nut (40, 50, 60) untergebracht sind, um einen proportionalen Faktor *k3* kleiner als ihre Dicke und um einen proportionalen Faktor *k4* größer als ihre Dicke ist, wenn eine Welle (70) einer Rotationsmaschine in den durch das obere Blatt (32, 33, 34) begrenzten Aufnahmeraum eingeführt wird.

6. Vorrichtung nach Anspruch 5, **dadurch gekennzeichnet, dass** der Proportionalfaktor *k3* größer als oder gleich 8 ist und der Proportionalfaktor *k4* kleiner als oder gleich 3 ist.

7. Vorrichtung nach einem der Ansprüche 1 bis 6, **dadurch gekennzeichnet, dass** für mindestens eine Längsnut (40, 50, 60) der Abstand *d1* zwischen einer oberen radialen Zunge (32a, 32b, 33a, 33b, 34a, 34b), die in der Nut (40, 50, 60) untergebracht ist, und einer gewellten radialen Zunge (22a, 22b, 23a, 23b, 24a, 24b), die in der Nut (40, 50, 60) untergebracht ist, um einen proportionalen Faktor *k5* geringer ist als die Dicke der oberen radialen Zunge, die in der Nut untergebracht ist, und um einen proportionalen Faktor *k6* größer ist als die Dicke der oberen radialen Zunge, die in der Nut untergebracht ist, wenn eine Welle (70) einer Rotationsmaschine in den Aufnahmeraum eingeführt wird, der durch das obere Blatt begrenzt ist.

8. Vorrichtung nach Anspruch 7, **dadurch gekennzeichnet, dass** der proportionale Faktor *k5* größer oder gleich 8 ist und der Proportionalfaktor k6 kleiner oder gleich 3 ist.

9. Vorrichtung nach einem der Ansprüche 1 bis 8, **dadurch gekennzeichnet, dass** diese ein radiales Spiel aufweist, wenn eine Welle (70) einer Rotationsmaschine in den von der oberen Auskleidung begrenzten Aufnahmeraum eingeführt wird, das um einen proportionalen Faktor *k7* größer als die Dicke eines oberen Blattes und um einen proportionalen Faktor *k8* kleiner als die Dicke eines oberen Blattes ist.

10. Vorrichtung nach Anspruch 9, **dadurch gekennzeichnet, dass** der proportionale Faktor *k7* gleich 0 ist und der Proportionalfaktor k8 kleiner als 2 ist.

11. Vorrichtung nach einem der Ansprüche 1 bis 10, **dadurch gekennzeichnet, dass** jede Längsnut (40, 50, 60) eine Längssymmetrieebene aufweist.

12. Vorrichtung nach einem der Ansprüche 1 bis 11, **dadurch gekennzeichnet, dass** mindestens ein gewelltes Blatt (22, 23, 24) ein glattes Metallblech, das sogenannte Trägerblatt, und mehrere Metallbleche mit Vorsprüngen (21) umfasst, die fest mit dem Trägerblatt verbunden sind.

13. Vorrichtung nach einem der Ansprüche 1 bis 12, **dadurch gekennzeichnet, dass** diese eine einzige Längsnut (40), eine aus einem einzigen gewellten Blatt (22) gebildete gewellte Auskleidung und eine aus einem einzigen oberen Blatt (32) gebildete obere Auskleidung umfasst, so dass die radialen Zungen der oberen und gewellten Blätter alle frei in derselben Nut (40) untergebracht sind.

14. Vorrichtung nach einem der Ansprüche 1 bis 13, **dadurch gekennzeichnet, dass** diese mindestens ein Mittel zur axialen Blockierung der gewellten und der oberen Auskleidung umfasst.

15. Verfahren zur Herstellung einer aerodynamischen Radiallagervorrichtung mit Blättern nach dem Anspruch 1, welches die Schritte umfasst:

Bohren einer zentralen Bohrung in eine zylindrische Hülse (10), die sich entlang einer Richtung, der sogenannten Längsrichtung, erstreckt, worin die zentrale Bohrung durch eine Innenfläche (11) begrenzt ist,

Einbringen mindestens einer Längsnut (40, 50, 60) in die zylindrische Hülse (10), die radial in die zentrale Bohrung mündet,

Versehen einer Verbindungsfläche (41a, 41b) zwischen der Längsnut (40) und der Innenfläche (11) der Hülse (10),

Ausbilden einer ersten peripheren inneren Auskleidung, der sogenannten gewellten Auskleidung, aus mindestens einem mit radialen Vorsprüngen (21) ausgestatteten Metallblech, dem sogenannten gewellten Blatt (22, 23, 24), die an jedem Ende eine radiale Zunge, die sogenannte gewellten radialen Zunge (22a, 22b, 23a, 23b, 24a, 24b), aufweist, die eine Hauptwölbung ausbildet, die die Vorsprünge trägt, die gegenüber der Innenfläche (11) der zylindrischen Hülse (10) angeordnet ist, um eine elastisch verformbare Auskleidung auszubilden,

freies Aufnehmen jeder radialen gewellten Zunge (22a, 22b, 23a, 23b, 24a, 24b) in einer Längsnut (40, 50, 60),

Ausbilden einer zweiten peripheren inneren Auskleidung, der sogenannten oberen Auskleidung, aus mindestens einem Metallblech, dem sogenannten oberen Blatt (32, 33, 34), worin die obere Auskleidung eine Hauptwölbung ausbildet, die gegenüber der Hauptwölbung der gewellten Auskleidung angeordnet ist, um einen Aufnahmeraum für eine Welle (70) einer Rotationsmaschine zu definieren, worin jede obere Auskleidung an jedem Ende eine radiale Zunge, die sogenannte obere radiale Zunge (32a, 32b, 33a, 33b, 34a, 34b), aufweist, und

freies Aufnehmen jeder oberen radiale Zunge (32a, 32b, 33a, 33b, 34a, 34b) in einer Längsnut (40, 50, 60).

## Claims

1. Device forming a foil air bearing, comprising a cylindrical sleeve (10) extending along a direction, called the longitudinal direction (X), and having an inner surface (11) which defines a central bore, **characterized in that** it further comprises:

- at least one longitudinal notch (40, 50, 60) formed in said cylindrical sleeve (20) and opening radially into said central bore through an opening (42),
- a first peripheral inner lining, called the bump lining, comprising at least one metal foil equipped with radial projections (21), called the bump foil (22, 23, 24), said bump lining forming a main curve housed in said central bore and carrying said projections (21) arranged opposite said inner surface (11) of said cylindrical sleeve (10) to form an elastically deformable lining, each bump foil (22, 23, 24) having, at each end, a radial tongue, called the radial bump tongue (22a, 22b, 23a, 23b, 24a, 24b), freely housed in a longitudinal notch (40, 50, 60),
- a second peripheral inner lining, called the top lining, housed in said central bore and comprising at least one metal foil, called the top foil (32, 33, 34), said top lining forming a main curve housed in said central bore and arranged opposite said main curve of said bump lining to define an enclosure for receiving a shaft (70) of a rotating machine, each top lining (32, 33, 34) having, at each end, a radial tongue, called the radial top tongue (32a, 32b, 33a, 33b, 34a, 34b), freely housed in a longitudinal notch (40, 50, 60).

2. Device according to claim 1, **characterized in that** at least one longitudinal notch (40, 50, 60) further comprises, on either side of said opening (42), an azimuthal clearance (43a, 43b) and a surface (44a, 44b) for connecting to said inner surface (11) of said cylindrical sleeve (10) that comprises at least one longitudinal segment (44a, 44b) which is arranged between said azimuthal clearance (43a, 43b) and said opening (42), forming a point-like azimuthal stop of said radial tongue (22a, 22b, 23a, 23b, 24a, 24b) of a bump foil (22, 23, 24) housed in this notch (40, 50, 60), the free end of said radial tongue (22a, 22b, 23a, 23b, 24a, 24b) extending into said azimuthal clearance.

3. Device forming a bearing according to one of claims 1 or 2, **characterized in that** each longitudinal notch (40, 50, 60) has a width $Le$ which is less, by a proportionality factor $k1$, than the distance $Dbump$ separating the projections (41) of the bump lining arranged on the main curve on either side of this longitudinal notch (40, 50, 60) and which is greater, by a proportionality factor *k2,* than the sum of the thicknesses of the radial tongues of the top foils (32, 33, 34) and bump foils (22, 23, 24) housed in this notch, when a shaft (70) of a rotating machine is inserted into said receiving enclosure delimited by said top foil.

4. Device according to claim 3, **characterized in that** the proportionality factor *k1* is equal to or less than 0.8 and the proportionality factor *k2* is greater than or equal to 1.2.

5. Device forming a bearing according to one of claims 1 to 4, **characterized in that**, for at least one longitudinal notch (40, 50, 60), the distance d3 separating the radial top tongues (32a, 32b, 33a, 33b, 34a, 34b) housed in this notch (40, 50, 60) is less than their thickness by a proportionality factor *k3* and greater than their thickness by a proportionality factor *k4,* when a shaft (70) of a rotating machine is inserted into said receiving enclosure delimited by said top foil (32, 33, 34).

6. Device according to claim 5, **characterized in that** said proportionality factor *k3* is greater than or equal to 8 and the proportionality factor *k4* is less than or equal to 3.

7. Device according to one of claims 1 to 6, **characterized in that**, for at least one longitudinal notch (40, 50, 60), the distance *d1* separating a radial top tongue (32a, 32b, 33a, 33b, 34a, 34b) housed in this notch (40, 50, 60) and a radial bump tongue (22a, 22b, 23a, 23b, 24a, 24b) housed in this notch (40, 50, 60) is less than the thickness of the radial top tongue housed in this notch by a proportionality factor *k5* and greater than the thickness of the radial top tongue housed in this notch by a proportionality factor *k6,* when a shaft (70) of a rotating machine is inserted into said receiving enclosure delimited by said top foil.

8. Device according to claim 7, **characterized in that** said proportionality factor *k5* is greater than or equal to 8 and the proportionality factor *k6* is less than or equal to 3.

9. Device according to one of claims 1 to 8, **characterized in that** it has radial play, when a shaft (70) of a rotating machine is inserted into said receiving enclosure delimited by said top lining, which radial play is greater than the thickness of a top foil by a proportionality factor k7 and less than the thickness of a top foil by a proportionality factor k8.

10. Device according to claim 9, **characterized in that** said proportionality factor k7 is equal to 0 and said proportionality factor k8 is less than 2.

11. Device according to one of claims 1 to 10, **characterized in that** each longitudinal notch (40, 50, 60) has a longitudinal plane of symmetry.

12. Device according to one of claims 1 to 11, **characterized in that** at least one bump foil (22, 23, 24) comprises a smooth metal foil, called the support foil, and a plurality of metal foils equipped with projections (21) which are secured to said support foil.

13. Device according to one of claims 1 to 12, **characterized in that** it comprises a single longitudinal notch (40), a bump lining formed from a single bump foil (22), and a top lining formed from a single top foil (32), so that the radial tongues of the top and bump foils are all freely housed in the same notch (40).

14. Device according to one of claims 1 to 13, **characterized in that** it comprises at least one means for axially locking said bump and top linings.

15. Method for manufacturing a device forming an air bearing with foils according to claim 1, comprising the steps of:

- machining a central bore extending along a direction, called the longitudinal direction, in a cylindrical sleeve (10), said central bore being delimited by an inner surface (11),
- machining at least one longitudinal notch (40, 50, 60) in said cylindrical sleeve (10), which notch opens radially into said central bore,
- providing a connection surface (41a, 41b) between said longitudinal notch (40) and the inner surface (11) of said sleeve (10),
- forming a first peripheral inner lining, called the bump lining, from at least one metal foil equipped with radial projections (21), called the bump foil (22, 23, 24), and having, at each end, a radial tongue, called the radial bump tongue (22a, 22b, 23a, 23b, 24a, 24b), said bump lining forming a main curve carrying said projections arranged opposite said inner surface (11) of said cylindrical sleeve (10) to form an elastically deformable lining,
- freely housing each radial bump tongue (22a, 22b, 23a, 23b, 24a, 24b) in a longitudinal notch (40, 50, 60),
- forming a second peripheral inner lining, called the top lining, from at least one metal foil, called the top foil (32, 33, 34), said top lining forming a main curve arranged opposite said main curve of said bump lining to define an enclosure for receiving a shaft (70) of a rotating machine, each top lining having, at each end, a radial tongue, called the radial top tongue (32a, 32b, 33a, 33b, 34a, 34b),
- freely housing each radial top tongue (32a,

**EP 3 818 273 B1**

32b, 33a, 33b, 34a, 34b) in a longitudinal notch (40, 50, 60).

Figure 1

40

70

10

## Figure 2

R

Z ⊙ X

34b
24b
43b
34a
44b
24a    43a
21  41b
44a
11
41a    10

70    42

## Figure 3

44b       44a

10

70

## Figure 4

Dbump

Le

34b
24b    d3   d1

21      34a      21

24a

rjr

70

## Figure 5

Figure 6

Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0490443 A
- EP 0601624 A
- FR 2700821
- US 2002054718 A
- WO 2006014659 A1
- WO 2005073572 A1
- JP S57109322 U
- US 5911510 A